# EUROPÄISCHE PATENTSCHRIFT

(11) **EP 3 488 138 B1**
(45) Veröffentlichungstag und Bekanntmachung des Hinweises auf die Patenterteilung: **13.01.2021**
(21) Anmeldenummer: 17739998.7
(22) Anmeldetag: 14.07.2017
(51) Int. Cl.: F16P 3/14, G08G 1/16

(54) **FAHRZEUGSICHERHEITSVORRICHTUNG MIT WARNZONEN**
VEHICLE SAFETY DEVICE WITH WARNING ZONES
DISPOSITIF DE SÉCURITÉ POUR VÉHICULE COMPRENANT DES ZONES D'AVERTISSEMENT

(30) Priorität: 19.07.2016 DE 102016113312
(43) Veröffentlichungstag der Anmeldung: 29.05.2019
(73) Patentinhaber: comnovo GmbH, 44227 Dortmund (DE)
(72) Erfinder: LEWANDOWSKI, Andreas, 44309 Dortmund (DE); WINKLER, Ron, 42287 Wuppertal (DE); KÖSTER, Volker, 44265 Dortmund (DE); GERSTEL, Dominik, 58239 Schwerte (DE)
(74) Vertreter: Eisenführ Speiser
(86) Internationale Anmeldenummer: PCT/EP2017/067931
(87) Internationale Veröffentlichungsnummer: WO 2018/015315

(56) Entgegenhaltungen:
- EP-A2- 0 899 583
- WO-A1-2009/055606
- DE-A1- 19 845 568
- DE-A1-102012 016 783
- DE-A1-102013 214 239

## Beschreibung

Die Erfindung betrifft eine Fahrzeugsicherheitsvorrichtung zum Warnen von Personen im Verkehr, ein Sicherungssystem mit einer Fahrzeugsicherheitsvorrichtung der vorgenannten Art, ein Warnmodul, ein Fahrzeugsystem sowie ein Verfahren zur Warnung von Personen im Verkehr, ein Computerprogrammprodukt und eine Verwendung einer vorgenannten Fahrzeugsicherheitsvorrichtung.

Eine vorgenannte Fahrzeugsicherheitsvorrichtung sowie ein entsprechendes Warnmodul sind grundsätzlich aus WO 2011/151291 A1 bekannt. Dort ist ein Annährungswarnsystem zur Erkennung der Annäherung beweglicher Objekte, insbesondere von Personen an ein Fahrzeug mit einem solchen Annährungswarnsystem offenbart.

Das offenbarte Annäherungswarnsystem umfasst ein Warnmodul und ein Markierungsmodul. Das Markierungsmodul, auch als "Keeper" bezeichnet, ist dazu vorgesehen, an einem Fahrzeug befestigt zu werden und umfasst eine Sendeeinheit für die Emission elektromagnetischer Signale und einen Bewegungsdetektor, der dazu dient, eine Bewegung des Markierungsmoduls zu detektieren und bei einer Detektion einer Bewegung Präsenzsignale als elektromagnetische Signale zu emittieren. Das Warnmodul, auch als "Beeper" bezeichnet, dient dazu, von einer Person getragen zu werden und weist eine Empfangseinheit für die von dem Markierungsmodul ausgestrahlten elektromagnetischen Signale auf. Ferner umfasst das Warnmodul eine Ausgabeeinheit, die abhängig vom Empfang der von dem Markierungsmodul ausgestrahlten Präsenzsignale eine Annäherungswarnung ausgibt.

Auch wenn dieses System bereits gut funktioniert und auch in der Praxis eingesetzt wird, hat sich gezeigt, dass weiterer Verbesserungsbedarf besteht. Insbesondere besteht der Bedarf, Fehlwarnungen, zum Beispiel bei sicherer Vorbeifahrt, zu vermeiden aber gleichzeitig Warnungen bei einer erhöhten Fahrzeuggeschwindigkeit oder unsicheren Bedingungen auch bei größerem Fahrzeugabstand, also größerem Abstand von Keeper zu Beeper, auszugeben. Aus der DE102013214239A1 ein Sicherungssystem (eine Warnvorrichtung) gemäß dem Oberbegriff des Anspruchs 1 bekannt.

Insbesondere die Vermeidung von Fehlwarnungen ist wichtig, da das Ausgeben von häufigen Fehlwarnungen zu einer Desensibilisierung der Personen, die geschützt werden sollen, führt und diese dann dazu neigen, nicht mehr sensibel genug auf eine Warnung zu reagieren. Daher soll erreicht werden, dass Warnungen möglichst nur dann ausgegeben werden, wenn diese tatsächlich berechtigt sind.

Es ist also eine Aufgabe der vorliegenden Erfindung, eine Fahrzeugsicherheitsvorrichtung, ein Sicherungssystem, ein Warnmodul, ein Verfahren zur Warnung von Personen im Verkehr, ein Computerprogrammprodukt sowie eine Verwendung der Fahrzeugsicherheitsvorrichtung anzugeben, die eine genauere Bestimmung einer Annäherung ermöglichen, um Fehlalarm weitgehend zu vermeiden.

Die Aufgabe wird durch ein Sicherungssystem gemäß dem Gegenstand des Anspruchs 1 gelöst. Des Weiteren wird ein Verfahren zur Warnung von Personen im Verkehr (Anspruch 9), ein Computerprogrammprodukt zum Ausführen des Verfahrens nach Anspruch 9 und eine Verwendung des Sicherungssystems nach Anspruch 1 bei einem Flurförderfahrzeug vorgeschlagen (Anspruch 13).

Der Erfindung liegt der Gedanke zugrunde, dass eine Vermeidung von Fehlalarmen durch eine genauere Positionsbestimmung des Warnmoduls, auch als "Beeper" bezeichnet, durch die Fahrzeugsicherheitsvorrichtung, auch als "Keeper" bezeichnet, ermöglicht wird. Durch das Vorsehen von drei Antennen, die beabstandet voneinander und in einer vorbestimmten räumlichen Beziehung zueinander an vorbestimmten Positionen an einem zu sicherndem Fahrzeug montiert werden, und jeweils ein elektromagnetisches Feld erzeugen, ist die Position des Warnmoduls relativ zu der Fahrzeugsicherheitsvorrichtung eindeutig bestimmbar. Wird stattdessen, wie im Stand der Technik bekannt, nur eine einzelne Antenne verwendet, kann zwar bestimmt werden, ob sich ein Beeper im Funkbereich der Antenne befindet und auch durch Messung der Intensität des Feldes, in welchem Abstand sich der Beeper zur Antenne befindet, aber eine eindeutige Position lässt sich so nicht feststellen.

Der Erfindung liegt weiterhin der Gedanke zugrunde, dass nicht nur das Kennen der eindeutigen Position des Warnmoduls relativ zu der Fahrzeugsicherheitsvorrichtung ausreicht. Daher ist zusätzlich eine Warnzone vorgesehen und mittels der Antenneneinheit bestimmt wird, ob sich das Warnmodul innerhalb der Warnzone befindet. Die Warnzone ist dabei nicht identisch mit dem Funkbereich der ersten, zweiten und dritten Antenne, sondern ein eigens für das entsprechende Fahrzeug definierter Bereich, wobei die Warnzone stets von wenigstens einem elektromagnetischen Feld einer Antenne abgedeckt ist, bevorzugt von zwei, besonders bevorzugt von allen drei elektromagnetischen Feldern aller drei Antennen abgedeckt wird. Das heißt, das Warnmodul kann sich innerhalb des Funkbereichs aller drei Antennen befinden, aber außerhalb der Warnzone.

Das Warnmodul kann tragbar oder stationär sein. Das Warnmodul kann beispielsweise als an der Person getragener Beeper ausgebildet sein und Personen, die gewarnt werden sollen, tragen ein derartiges tragbares Warnmodul bei sich. In einer Variante ist das Warnmodul ortsfest angebracht, beispielsweise an Wegkreuzungen oder Tordurchfahrten in Hallen, in denen das entsprechende Fahrzeug eingesetzt wird. Dies ist besonders bevorzugt bei größeren Logistikanlagen, in denen eine Vielzahl von Flurförderfahrzeugen, wie Gabelstapler, eingesetzt werden. Bei einem ortsfesten Warnmodul wird dann bestimmt, ob sich das Fahrzeug, an dem die Sicherheitsvorrichtung vorgesehen ist, so auf das ortsfeste Hindernis zubewegt, dass dieses ortsfeste Hindernis in die Warnzone gelangt. Ebenso kann das Warnmodul auf anderen Fahrzeugen montiert sein. Es soll verstanden werden, dass nicht nur ein Warnmodul vorgesehen sein kann, sondern die Fahrzeugsicherheitsvorrichtung gemäß der Erfindung auch mehrere Warnmodule erfassen und bestimmen kann, ob sich diese Warnmodule innerhalb der Warnzone befinden.

Die Warnzone ist vorzugsweise vordefiniert und angepasst an das Fahrzeug und die entsprechenden Umgebungsbedingungen, erwarteten Gefahren und Geschwindigkeiten, sowie das Fahrzeugverhalten. So ist beispielsweise bei erwarteten höheren Geschwindigkeiten oder höheren Bremswegen eine größere Warnzone vorzusehen, als bei geringen Geschwindigkeiten.

Gemäß einer ersten bevorzugten Ausführungsform der Fahrzeugsicherheitsvorrichtung ist die Steuereinheit dazu ausgebildet, die Position des Warnmoduls innerhalb der Warnzone relativ zu der Antenneneinheit zu bestimmen. Demnach wird nicht nur bestimmt, ob sich das Warnmodul innerhalb der Warnzone befindet, sondern auch, wo sich das Warnmodul in der Warnzone befindet. Auch diese Information kann dafür verwendet werden, Fehlwarnungen zu vermeiden. Wird beispielsweise detektiert, dass das Warnmodul in Fahrtrichtung links von dem entsprechenden Fahrzeug innerhalb der Warnzone ist, und wird gleichzeitig detektiert, dass das Fahrzeug in Fahrtrichtung nach rechts abbiegt, ist es nicht erforderlich, eine Warnung auszugeben. Die Genauigkeit der Positionsbestimmung beträgt vorzugsweise 20 cm, besonders bevorzugt 10 cm. Dies wird dadurch erreicht, dass Antennen im Hochfrequenzbereich verwendet werden, die beispielsweise in 2,4 GHz Bereich oder in 4 GHz Bereich bis 200 m Reichweite arbeiten. Die Antennen sind dazu als Hochfrequenzfunkantennen ausgebildet. Es hat sich herausgestellt, dass Antennen, die auf Basis der Radartechnologie, Infrarottechnologie oder RFID-Technologie arbeiten, in der Regel solch Genauigkeiten in den Anwendungsfällen nur schwer erreichen können.

Grundsätzlich können die Antennen ausgebildet sein, wie in WO 2011/151291 A1 beschrieben und insofern wird vollumfänglich auf die dort beschriebene Antennentechnologie verwiesen.

Ferner ist bevorzugt, dass die Steuereinheit dazu angepasst ist, die Warnzone in Abhängigkeit von wenigstens einem der folgenden Parameter zu definieren: Fahrgeschwindigkeit, Fahrtrichtung, Ort, Beladung des Fahrzeugs, Tageszeit, relative Geschwindigkeit zu dem Warnmodul, Sitzkontaktschalter, Lenkeinschlag, Temperatur, Schlupf von Fahrzeugrädern, ABS-Signal.

Die Fahrzeugsicherheitsvorrichtung ist dazu vorzugsweise mit entsprechenden Sensoren ausgestattet, oder wird mit entsprechenden Signalen einer Fahrzeugsteuerung versorgt. Dazu kann die Fahrzeugsicherheitsvorrichtung mit einer zentralen Fahrzeugsteuerung verbunden bzw. verbindbar sein. Es ist vorzugsweise vorgesehen, dass die Warnzone nicht statisch ist, sondern abhängig von einem oder mehreren der genannten Parameter angepasst bzw. variiert wird. So ist es beispielsweise bevorzugt, dass bei einer hohen Fahrtgeschwindigkeit die Warnzone vergrößert wird, um dem erhöhten Bremsweg und der Reaktionszeit eines Fahrers Rechnung zu tragen. Das Gleiche gilt für den Schlupf der Fahrzeugräder oder der Temperatur. Ist beispielsweise eine Fahrbahn nass, ist ebenfalls der Bremsweg erhöht und eine größere Warnzone ist bevorzugt. In Abhängigkeit der Fahrtrichtung kann vorgesehen sein, dass die Warnzone in dieser Fahrtrichtung vergrößert ist und in Richtungen seitlich bzw. entgegen der Fahrtrichtung verkleinert ist, um Fehlalarm zu vermeiden. Bei einer höheren Beladung des Fahrzeugs ist ebenfalls eine vergrößerte Warnzone bevorzugt. Es kann vorgesehen sein, dass bei Fehlen eines Signals des Kontaktschalters keine Warnzone, bzw. eine sehr kleine Warnzone definiert wird, da dann kein Bediener auf dem Fahrzeugsitz Platz genommen hat.

In einer weiteren bevorzugten Ausführungsform ist die Warnzone derart definiert, dass sie sich an dem entsprechenden Fahrzeug von der Front langgestreckt nach vorne erstreckt und an Fahrzeugseiten schmal ausgebildet ist. Eine derartige Warnzonenkonfiguration wird dem Umstand gerecht, dass das Fahrzeug in der Regel geradeaus bzw. nach vorne fährt und eine Vorbeifahrt an Personen ungefährlich ist. Daher ist an Seiten des Fahrzeugs die Warnzone schmal ausgebildet und nach vorne, in Fahrtrichtung, langgestreckt. Bevorzugt ist hier beispielsweise ein Verhältnis in einem Bereich von 1,5:1 bis 4:1, wobei ein Wert von etwa 2:1 besonders bevorzugt ist. Das heißt, eine axiale Länge in Fahrtrichtung der Zone ist etwa doppelt so lang wie eine Breite der Zone quer zur Fahrtrichtung, jeweils gemessen von dem Fahrzeug aus. Weiterhin ist bevorzugt, dass eine axiale Warnzonenlänge in Fahrtrichtung in etwa einer Fahrzeuglänge in Fahrtrichtung entspricht; eine Breite der seitlichen Abschnitte der Warnzone entspricht vorzugsweise dem doppelten der Fahrzeugbreite. In vielen Fällen ist eine axiale Länge der Warnzone nach vorne in Fahrtrichtung etwa 2 bis 2,5 m, während die Warnzone sich seitlich vom Fahrzeug etwa 1 bis 1,2 m erstreckt. Diese Werte sind abhängig von vielerlei Faktoren und insbesondere dem Einsatzbereich. Die vorgenannten Werte haben sich als vorteilhaft für den Bereich der Logistik und für Flurförderfahrzeuge erwiesen.

Dabei ist besonders bevorzugt, dass die Warnzone einen Frontalabschnitt aufweist, der sich in einer vertikalen Projektion im Wesentlichen rechteckig oder trapezförmig sich aufweitend nach vorne erstreckt. Es hat sich herausgestellt, dass ein solcher Frontalbereich bevorzugt ist, um eine sichere Detektion des Warnmoduls zu erreichen und Fehlalarm zu vermeiden. Eine trapezförmige, sich aufweitende Form für den Frontalabschnitt ist insbesondere bei höheren Fahrtgeschwindigkeiten und ungewisser Fahrtrichtung bevorzugt.

Weiterhin ist bevorzugt, dass die Warnzone zwei Seitenabschnitte aufweist, die sich etwa in einem Bereich von 30 cm bis 2,5 m, vorzugsweise 50 cm bis 2,5 m von dem zu sichernden Fahrzeug erstrecken. Gemessen werden diese Werte senkrecht zu einer Fahrzeuglängsachse. Eine solche Ausbildung ermöglicht eine sichere Vorbeifahrt an stehenden, oder sich bewegenden Warnmodulen, ohne dass ein Fehlalarm ausgelöst wird.

In einer bevorzugten Ausgestaltung der Erfindung ist die Steuereinheit dazu angepasst, in Antwort auf das Bestimmen, dass sich ein auf die Antenneneinheit abgestimmtes Warnmodul innerhalb der Warnzone befindet, ein Warnsignal auszugeben. Hierdurch wird auch der Fahrzeugführer des Fahrzeugs, an dem die entsprechende Fahrzeugsicherheitsvorrichtung angebracht ist, darüber informiert, dass ein Warnmodul in die Warnzone eingetreten ist. Hierdurch hat ein Bediener die Möglichkeit, auf diese Gefahr zu reagieren und entsprechende Gegenmaßnahmen zu ergreifen. Das Warnsignal kann beispielsweise ein Audiosignal oder ein visuelles Signal sein, oder ein drahtgebundenes oder Funksignal, das an eine Warneinheit, die ebenfalls an dem entsprechenden Fahrzeug oder an einem Leitstand angeordnet ist, ausgegeben wird.

In einer weiteren bevorzugten Ausgestaltung ist die Steuereinheit dazu angepasst, mit einer Fahrzeugsteuerung des zu sichernden Fahrzeugs verbunden zu sein und das Warnsignal an die Fahrzeugsteuerung auszugeben, derart, dass das Fahrzeug abgebremst wird. In einem solchen Fall ist vorgesehen, dass sobald ein Warnmodul in der Warnzone erfasst wird, das Fahrzeug, an dem die Fahrzeugsicherheitsvorrichtung montiert ist, abgebremst wird. Hierdurch wird die Sicherheit erhöht. Ein Fahren mit überhöhter Geschwindigkeit, während sich das Warnmodul in der Warnzone befindet, wird somit vermieden.

Ferner ist bevorzugt, dass die Steuereinheit eine Anzeigeeinrichtung aufweist, mittels der die Position des Warnmoduls, welches innerhalb der Warnzone ist, relativ zu der Antenneneinheit anzeigbar ist. Durch eine derartige Anzeigeeinrichtung kann ein Führer des zu sichernden Fahrzeugs erkennen, wo sich das Warnmodul in der Warnzone befindet, und entsprechend reagieren. Sieht ein Fahrzeugführer beispielsweise, dass das Warnmodul im Heckbereich des Fahrzeugs ist, wird er bei Rückwärtsfahrt besonders vorsichtig reagieren.

Gemäß einer weiteren bevorzugten Ausführungsform weist die Antenneneinheit eine vierte Antenne auf, die dazu vorgesehen ist, einen sicheren Bereich zu definieren. Eine solche Antenne kann zum sogenannten "Muting" eingesetzt werden und hierdurch können spezielle Bereiche definiert werden, in denen kein Warnsignal ausgegeben werden soll. Dies ist insbesondere vorteilhaft für einen Innenraum des zu sichernden Fahrzeugs. Trägt ein Fahrzeugführer selbst ein Warnmodul bei sich und betritt das Fahrzeug, ist eine solche vierte Antenne besonders vorteilhaft, um ein Detektieren des durch den Fahrzeugführer getragenen Warnmoduls in der Warnzone zu vermeiden. Auch hierdurch werden Fehlalarme vermieden.

Die eingangs genannte Aufgabe wird gemäß einem zweiten Aspekt der Erfindung bei einem Sicherungssystem der eingangs genannten Art, umfassend eine Fahrzeugsicherheitsvorrichtung nach wenigstens einem der vorstehend beschriebenen bevorzugten Ausführungsformen der Fahrzeugsicherheitsvorrichtung gemäß dem ersten Aspekt der Erfindung gelöst, durch wenigstens ein Warnmodul, das auf die Antenneneinheit der Fahrzeugsicherheitsvorrichtung abgestimmt ist, wobei das Warnmodul eine Steuereinheit und eine Antenne aufweist, die auf die Antenneneinheit der Fahrzeugsicherheitsvorrichtung abgestimmt ist, und wobei das Warnmodul dazu ausgebildet ist, ein Warnsignal auszugeben, wenn bestimmt wird, dass sich das Warnmodul innerhalb der Warnzone befindet. Das Warnmodul kann tragbar, stationär oder auf einem Fahrzeug montiert sein. Ein tragbares Warnmodul wird auch als "Beeper" bezeichnet, während ein stationäres Warnmodul als "Anker" bezeichnet wird. Ist das Warnmodul auf einem Fahrzeug montiert, welches ebenfalls mit der Fahrzeugsicherheitsvorrichtung gemäß dem ersten Aspekt der Erfindung ausgestattet ist, erlaubt dies auch eine Fahrzeug-zu-Fahrzeug Warnung, wenn sich ein Fahrzeug einem andere nähert. In einem solchen Fall können die Fahrzeugsicherheitsvorrichtung und das entsprechende auf dem Fahrzeug montierte Warnmodul auch integriert ausgebildet sein. Bevorzugt ist die Steuereinheit des Warnmoduls so ausgebildet, dass das Warnmodul zunächst ein Signal von der Fahrzeugsicherheitsvorrichtung empfängt und basierend auf diesem Signal ein Warnsignal ausgibt, wenn sich das Warnmodul innerhalb der Warnzone befindet. So kann beispielsweise vorgesehen sein, dass die Fahrzeugsicherheitsvorrichtung dem Warnmodul mittels eines entsprechenden Signals mitteilt, wenn sich dieses in der Warnzone befindet, sodass das Warnmodul dann ein entsprechendes Warnsignal ausgibt.

In einer bevorzugten Ausführungsform des Sicherungssystems ist die Fahrzeugsicherheitsvorrichtung dazu ausgebildet, eine Konfiguration der Warnzone an das Warnmodul zu senden, wenn sich dieses in Reichweite der Antenneneinheit befindet. Sobald das Warnmodul in die Reichweite der Antenneneinheit kommt, teilt die Fahrzeugsicherheitsvorrichtung dem Warnmodul die aktuelle Konfiguration der Warnzone mit. Das Warnmodul ist vorzugsweise dazu ausgebildet, die Konfiguration der Warnzone zu speichern und basierend auf dieser und dem Signal der Antenneneinheit mittels der Steuereinheit des Warnmoduls zu bestimmen, ob sich das Warnmodul in der Warnzone befindet oder nicht. Befindet sich das Warnmodul in der Warnzone, gibt das Warnmodul ein Warnsignal aus. Hierdurch wird die Bestimmung, ob sich das Warnmodul in der Warnzone befindet oder nicht, effizient gestaltet.

Weiterhin ist bevorzugt, dass die Fahrzeugsicherheitsvorrichtung dazu ausgebildet ist, die relative Position des Warnmoduls zu der Antenneneinheit an das Warnmodul zu senden. In dieser Ausführungsform ist es nicht erforderlich, dass das Warnmodul selbst seine Position bestimmt, sondern das Warnmodul erhält seine Position von der Fahrzeugsicherheitsvorrichtung mitgeteilt. Dies ist besonders bevorzugt, wenn das Warnmodul tragbar ausgebildet ist, da es dann in der Regel batteriebetrieben ist. Um hier den Energieverbrauch zu senken und so die Betriebsdauer zu erhöhen, ist es bevorzugt, dass nur die Fahrzeugsicherheitsvorrichtung die Position des Warnmoduls bestimmt und dem Warnmodul diese Position mitteilt. Hat das Warnmodul zuvor die Konfiguration der Warnzone erhalten, kann das Warnmodul selbstständig bestimmen, ob es sich in der Warnzone befindet oder nicht. Basierend auf dem Ergebnis wird dann ggf. ein Warnsignal ausgegeben.

Es soll verstanden werden, dass die Fahrzeugsicherheitsvorrichtung und das Sicherungssystem gemäß dem ersten und zweiten Aspekt der Erfindung gleiche und ähnliche Aspekte aufweisen, wie sie insbesondere in den Unteransprüchen definiert sind. Daher wird vollumfänglich auf die obige Beschreibung zum ersten Aspekt der Erfindung Bezug genommen. Gemäß einem dritten Aspekt der Erfindung wird die eingangs genannte Aufgabe durch ein Warnmodul gelöst, mit einer Steuereinheit und einer Antenne, zur Verwendung in einem Sicherungssystem nach einer der vorstehend beschriebenen bevorzugten Ausführungsformen eines Sicherungssystems gemäß dem zweiten Aspekt der Erfindung.

Das Warnmodul weist demnach eine Steuereinheit und eine Antenne auf, die auf die Antenneneinheit der Fahrzeugsicherheitsvorrichtung angepasst sind, wobei das Warnmodul dazu ausgebildet ist, ein Warnsignal auszugeben, wenn bestimmt wird, dass sich das Warnmodul innerhalb der Warnzone befindet. Es soll verstanden werden, dass das Warnmodul gemäß dem dritten Aspekt der Erfindung gleiche und ähnliche Unteraspekte wie die Fahrzeugsicherheitsvorrichtung gemäß dem ersten Aspekt der Erfindung und das Sicherungssystem gemäß dem zweiten Aspekt der Erfindung aufweist und insofern wird für die bevorzugten Ausführungsformen und Vorteile des Warnmoduls insbesondere auf die obige Beschreibung zum Sicherungssystem gemäß dem zweiten Aspekt der Erfindung verwiesen.

In einem vierten Aspekt löst die Erfindung die eingangs genannte Aufgabe durch ein Fahrzeugsystem mit einem Fahrzeug und einer Fahrzeugsicherheitsvorrichtung nach einer der vorstehend beschriebenen bevorzugten Ausführungsform in einer Fahrzeugsicherheitsvorrichtung gemäß dem ersten Aspekt der Erfindung. Gemäß dem vierten Aspekt der Erfindung ist demnach eine Fahrzeugsicherheitsvorrichtung an dem Fahrzeug montiert, sodass das Fahrzeug gesichert ist.

In einem fünften Aspekt löst die Erfindung die eingangs genannte Aufgabe bei einem Verfahren zur Warnung von Personen im Verkehr mit den Schritten: Definieren einer Warnzone wenigstens teilweise um ein Fahrzeug; Überwachung der Warnzone mittels Funk; Bestimmen, ob sich ein Warnmodul innerhalb der Warnzone befindet; und Bestimmen der Position des Warnmoduls innerhalb der Warnzone. Es soll verstanden werden, dass das Verfahren gemäß dem fünften Aspekt der Erfindung gleiche und ähnliche Unteraspekte wie die ersten vier Aspekte der Erfindung aufweist und insofern wird vollumfänglich auf die obige Beschreibung Bezug genommen.

Bevorzugt umfasst der Schritt des Definierens der Warnzone: Zugreifen auf eine in einer Steuereinheit vorgespeicherte Konfiguration der Warnzone; Verwenden der vorgespeicherten Konfiguration zur Definition der Warnzone. Bevorzugt ist eine Standardwarnzone in einer Steuereinheit vorgespeichert und nach Start eines Systems wird diese Konfiguration der Warnzone abgerufen. Bevorzugt ist eine Vielzahl von Warnzonenkonfigurationen vorgespeichert und situationsabhängig wird eine entsprechende Konfiguration zur Definition der Warnzone ausgewählt.

Bevorzugt umfasst der Schritt Definieren der Warnzone: Erfassen oder Bestimmen wenigstens einen der folgenden Parameter: Fahrgeschwindigkeit, Fahrtrichtung, Ort, Beladung des Fahrzeugs, Tageszeit, relative Geschwindigkeit zu dem Warnmodul, Sitzkontaktschalter, Lenkeinschlag, Temperatur, Schlupf von Fahrzeugrädern, ABS-Signal; und Ändern der Konfiguration der Warnzone basierend auf dem wenigstens einen erfassten oder bestimmten Parameter. So ist es möglich, dass situationsabhängig eine entsprechende Warnzonenkonfiguration ausgewählt und die Warnzone entsprechend definiert wird. Hierdurch wird die Sicherheit erhöht und ein Fehlalarm wird weitgehend vermieden. Weiterhin löst die Erfindung in einem sechsen Aspekt die eingangs genannte Aufgabe durch ein Computerprogrammprodukt, aufweisend Code-Mittel, die dazu ausgebildet sind, wenn auf einem Computer ausgeführt, das vorstehend beschriebene Verfahren gemäß dem fünften Aspekt der Erfindung auszuführen.

In einem siebten Aspekt wird die eingangs genannte Aufgabe gelöst durch eine Verwendung der Fahrzeugsicherheitsvorrichtung gemäß dem ersten Aspekt der Erfindung, bei einem Flurförderfahrzeug, insbesondere einem Gabelstapler, einem Minenfahrzeug, einem Baustellenfahrzeug oder einem Forstfahrzeug.

Nachstehend wir die Erfindung anhand von Ausführungsbeispielen unter Bezugnahme auf die beiliegenden Figuren näher erläutert. Dabei zeigen:
- Fig. 1: eine schematische Draufsicht auf ein Fahrzeugsystem mit einem Fahrzeug und einer Fahrzeugsicherheitsvorrichtung;
- Fig. 2: das Fahrzeugsystem aus Figur 1 mit einem Warnmodul innerhalb der Warnzone;
- Fig. 3: das Fahrzeugsystem aus den Figuren 1 und 2 mit der Warnzone einer zweiten Konfiguration;
- Fig. 4: ein zweites Ausführungsbeispiel eines Fahrzeugsystems gemäß der Erfindung;
- Fig. 5: das Fahrzeugsystem aus Figur 4 mit einer zweiten Warnzonenkonfiguration;
- Fig. 6: eine Draufsicht auf ein Fahrzeugsystem gemäß einem weiteren Ausführungsbeispiel mit einem Radlader;
- Fig. 7: eine schematische Darstellung von zwei Fahrzeugsystemen in einem Gang in einer Halle bei einem Fußgängerüberweg und zwei entsprechenden statischen Warnmodulen;
- Fig. 8: eine schematische Darstellung eines tragbaren Warnmoduls;
- Fig. 9: eine schematische Darstellung einer Anzeigeeinheit einer Fahrzeugsicherheitsvorrichtung;
- Fig. 10: eine schematische Aufstellung des Aufbaus einer Fahrzeugsicherheitsvorrichtung;
- Fig. 11: eine schematische Aufstellung des Aufbaus eines Warnmoduls; und
- Fig. 12: ein Flussdiagramm, das die Kommunikation zwischen der Fahrzeugsicherheitsvorrichtung und dem Warnmodul illustriert.

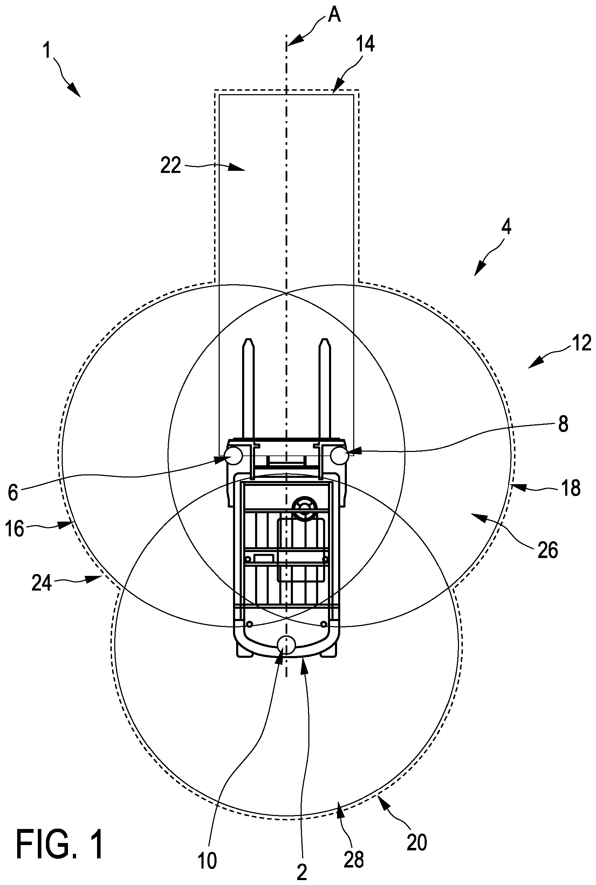

Gemäß Figur 1 umfasst ein Fahrzeugsystem 1 ein Fahrzeug 2 sowie eine Fahrzeugsicherheitsvorrichtung 4. Das Fahrzeug 2 ist hier von oben dargestellt und in Form eines Gabelstaplers. Gabelstapler werden vielfach eingesetzt und gerade hier hat sich gezeigt, dass Unfälle verhältnismäßig häufig auftreten. Daher ist es bevorzugt, gerade Gabelstapler mit der Fahrzeugsicherheitsvorrichtung 4 gemäß der Erfindung auszurüsten. Die Fahrzeugsicherheitsvorrichtung 4 gemäß dem ersten Ausführungsbeispiel (Figuren 1 bis 3) weist eine erste Antenne 6, eine zweite Antenne 8, sowie eine dritte Antenne 10 auf. Die ersten und zweiten Antennen 6, 8 sind dabei an den linken und rechten Ecken der Front des Fahrzeugs 2, und die dritte Antenne 10 ist am Heck des Fahrzeugs 2 angeordnet. Gemeinsam bilden die ersten, zweiten und dritten Antennen 6, 8, 10 eine Antenneneinheit 12. Die Antenneneinheit 12 überwacht eine Warnzone 14, die hier durch die gestrichelte Linie dargestellt ist. Alle drei Antennen 6, 8, 10 spannen jeweils ein kugelförmiges Funkfeld 16, 18, 20 auf, welches schematisch durch die Kreise illustriert ist. Die Kreise illustrieren nur das Funkfeld 16, 18, 20, es soll aber verstanden werden, dass die tatsächliche Reichweite der Antennen 6, 8, 10 wesentlich größer ist und in der Realität bis zu 200 m beträgt. Zu berücksichtigen sind allerdings Abschirmeffekte, die durch das Fahrzeug 2 oder eine entsprechende Ladung des Fahrzeugs verursacht werden können.

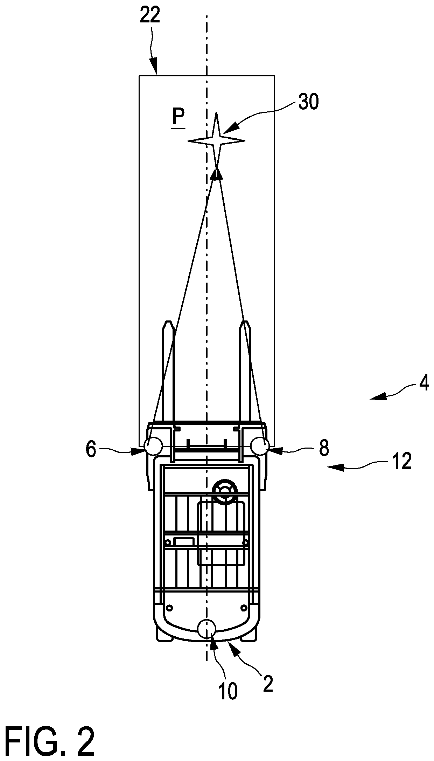

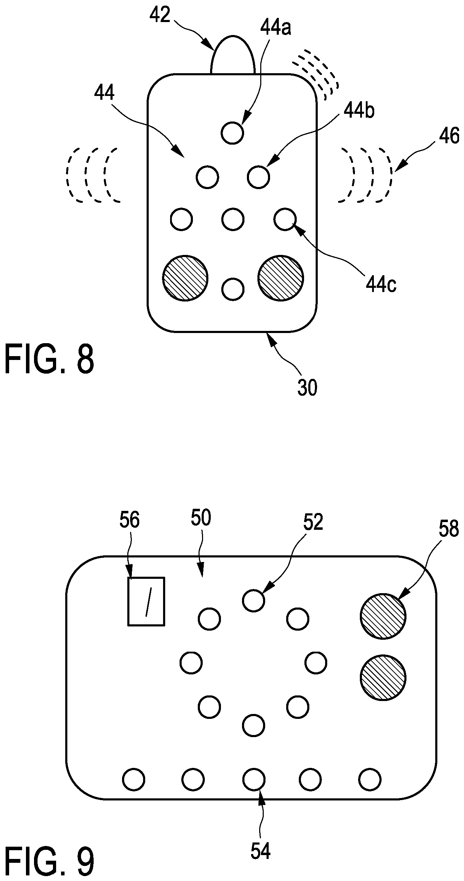

Die Warnzone 14 weist gemäß diesem Ausführungsbeispiel einen Frontalabschnitt 22 auf, der sich von der Fahrzeugfront im Wesentlichen in Richtung einer Längsachse A des Fahrzeugs 2 in Fahrtrichtung entlang der Längsachse A erstreckt. Ferner weist die Warnzone 14 zwei Seitenabschnitte 24, 26 sowie einen Heckabschnitt 28 auf. Die Seiten und Heckabschnitte 24, 26, 28 sind im Vergleich zum Frontalabschnitt 22 schmal ausgeführt. Das Fahrzeug 2 wird sich im Regelfall nach vorne in Fahrtrichtung bewegen, sodass die Seiten und die Heckzonen 24, 26, 28 schmal ausgeführt sein können. Nur wenn ein entsprechendes Warnmodul 30 (vgl. Figur 2) innerhalb der Warnzone 14 ist, wird das Warnmodul 30 ein entsprechendes Warnsignal ausgeben. Gleichzeitig wird eine Anzeigeeinheit (vgl. Figur 9) der Fahrzeugsicherheitsvorrichtung 4 ein entsprechendes Warnsignal ausgeben.

Aufgrund der drei Antennen 6, 8, 10 ist es möglich, die Position P eines Warnmoduls 30 (vgl. Figur 2) innerhalb der Warnzone 14 (vgl. Figur 2, nur der Frontalabschnitt 22 gezeigt) zu bestimmen. Hierdurch lässt sich eine gezielte Warnung ausgeben und Fehlwarnungen werden vermieden.

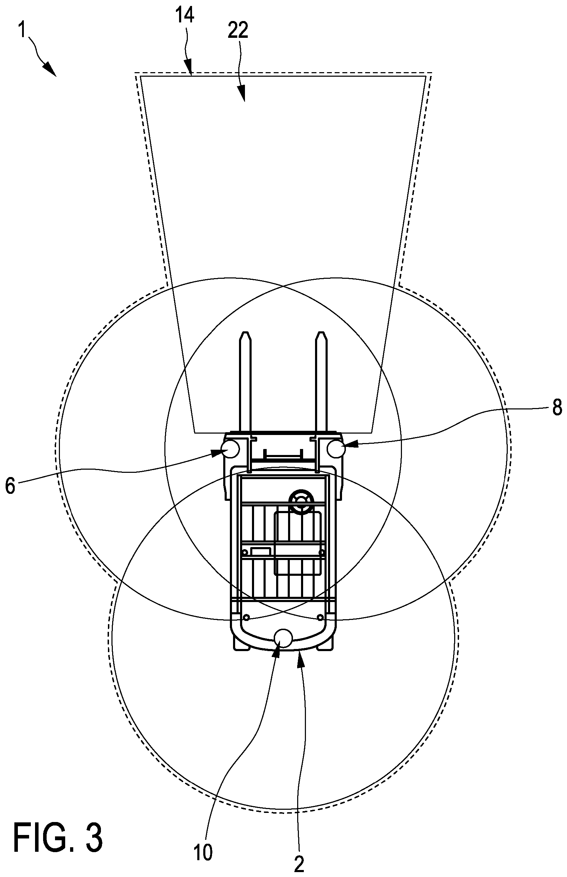

Ein besonderer Aspekt der vorliegenden Erfindung ist, dass die Warnzone 14 durch wenigstens drei Antennen 6, 8, 10 überwacht wird, wobei die Warnzone 14 wenigstens teilweise im Reichweitenbereich der drei Antennen 6, 8, 10 liegt. Hierdurch lässt sich die Warnzone 14 dynamisch an sich ändernde Umgebungsbedingungen anpassen. Figur 3 zeigt ein solches Beispiel. Hier ist ein Fahrzeugsystem 1 gemäß Figur 1 dargestellt, wobei die Warnzone 14 in einer zweiten Konfiguration definiert ist. Der Unterschied der Warnzonenkonfiguration gemäß Figur 3 und der Warnzonenkonfiguration gemäß Figur 1 liegt darin, dass der Frontalabschnitt 22 trapezförmig sich in Fahrtrichtung hin aufweitend ausgebildet ist. In Figur 1 ist der Frontalabschnitt 22 im Wesentlichen rechteckig. Eine Konfiguration, wie in Figur 1 gezeigt, ist insbesondere dann vorteilhaft, wenn vorwiegend Geradeausfahrt erwartet wird. Die Konfiguration gemäß Figur 3 bietet sich insbesondere bei höheren Geschwindigkeiten und/oder unsicherer Fahrtrichtung an. Hierdurch ist die Warnzone 14 insgesamt etwas größer und dadurch auch der Bereich, in dem ein Warnsignal an ein Warnmodul 30 ausgegeben wird, größer.

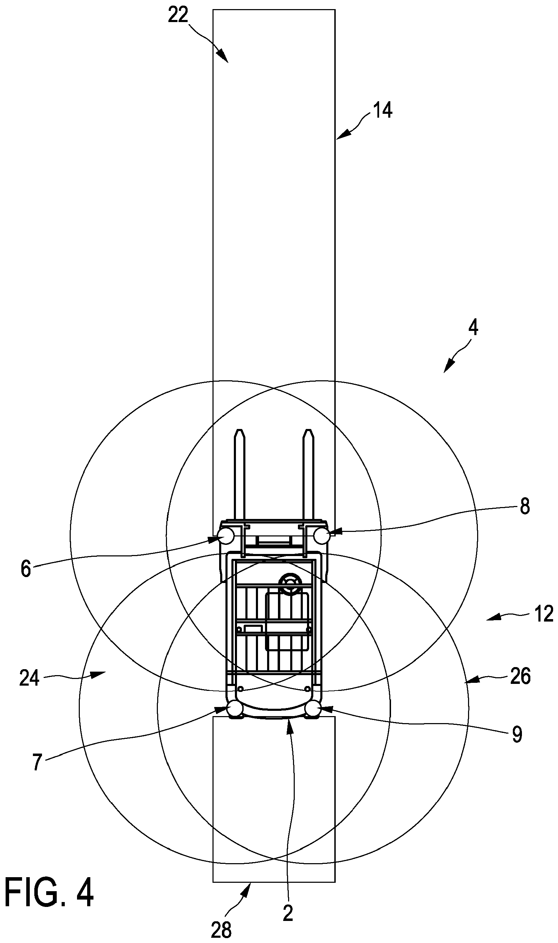

Gemäß Figur 4 ist ein weiteres Ausführungsbeispiel eines Fahrzeugsystems 1 gezeigt und gleiche und ähnliche Elemente sind mit gleichen Bezugszeichen versehen. Insofern wird vollumfänglich auf die obige Beschreibung zu den Figuren 1 bis 3 Bezug genommen.

Das Fahrzeugsystem 1 gemäß Figur 4 weist an dem Fahrzeug 2 vier Antennen 6, 8, 7, 9 auf, die zur Überwachung der Warnzone 14 dienen. Zusätzlich kann eine weitere Antenne zum Stummschalten vorgesehen sein. Im Unterscheid zu dem ersten Ausführungsbeispiel sind gemäß diesem Ausführungsbeispiel (Figur 4) zwei Antennen 7, 9 am Heck des Fahrzeugs angeordnet und zwar ebenso an Ecken, sodass die vier Antennen 6, 8, 7, 9 insgesamt ein Rechteck aufspannen. Figur 4 zeigt zudem eine Warnzonenkonfiguration, wie sie für hohe Geschwindigkeiten bevorzugt ist. Der Frontalabschnitt 22 der Warnzone 14 ist in Fahrtrichtung sehr lang ausgeführt und umfasst etwa das 2,5-fache der Fahrzeuglänge. Hierdurch ist es möglich, auch bei hohen Geschwindigkeiten und somit hohen Annäherungsgeschwindigkeiten an ein Warnmodul 30 ausreichend Zeit zum Abbremsen zu gewährleisten. Weiterhin ist im Unterschied zu dem ersten Ausführungsbeispiel (Figuren 1 bis 3) der Heckabschnitt 28 der Warnzone 14 ebenfalls im Wesentlichen rechteckig ausgebildet. Eine solche Konfiguration ist bei häufiger Rückwärtsfahrt ebenfalls vorteilhaft. Es soll verstanden werden, dass mit dem Ausführungsbeispiel gemäß Figur 4 auch eine Warnzonenkonfiguration wie in den Figuren 1 bis 3 ausgebildet werden kann. Es kommt allein darauf an, dass die Antennen 6, 8, 7, 9, 10 insgesamt einen Bereich überdecken und eine frei definierte Warnzone 14 überwacht werden kann.

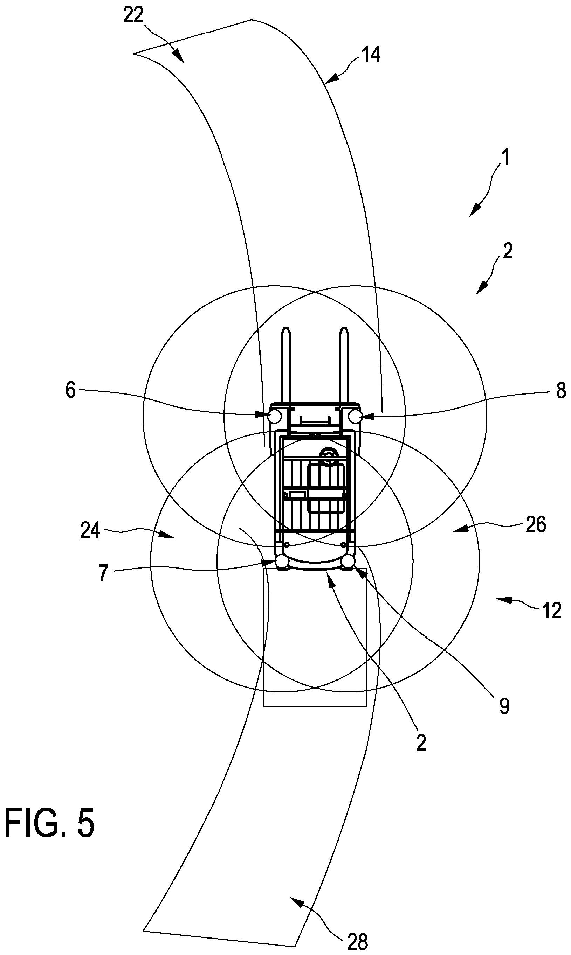

Die Warnzonenkonfiguration ist gemäß der Erfindung anpassbar an sich ändernde Umgebungsbedingungen. So zeigt Figur 5 wie sich die Warnzone 14 bevorzugt ändert, wenn eine Kurvenfahrt des Fahrzeugs 2 erwartet wird, beispielsweise aufgrund eines Lenkeinschlags oder einer Navigationsanweisung eines Navigationssystems. Wird bei dem Fahrzeug 2 gemäß Figur 4 eine Kurvenfahrt nach links in Fahrtrichtung erwartet, ändert sich die Konfiguration der Warnzone 14 derart, dass der Frontalabschnitt 22 und der Heckabschnitt 28 entsprechend gekrümmten Rechtecken ausgebildet sind, um so einen Bereich abzudecken, in dem sich das Fahrzeug 2 bei der Kurvenfahrt bewegen wird. Dies ist in Figur 5 illustriert. Bei einem Vergleich der Figuren 4 und 5 erkennt man, dass ein Warnmodul 30, welches nach links versetzt von dem Fahrzeug 2 angeordnet ist bei einer Warnzonenkonfiguration wie in Figur 4 gezeigt, nicht zwangsläufig erfasst wird. Bei der Konfiguration der Warnzone 14 gemäß Figur 5 liegt der lang gestreckte Frontalabschnitt 22 in Fahrtrichtung und so können Warnmodule 30 im Fahrtweg auf einfache Art und Weise erfasst und eine Warnung ausgegeben werden.

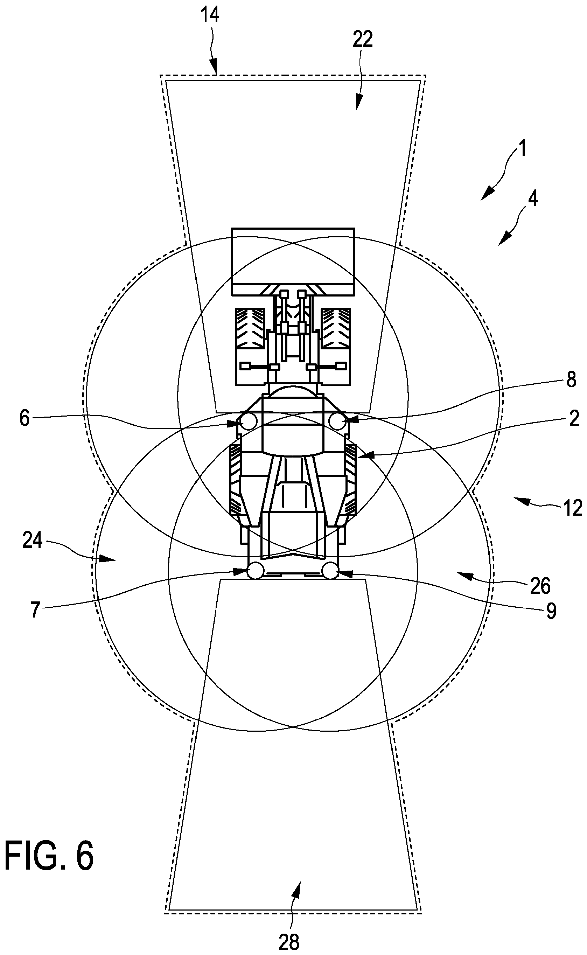

Das Ausführungsbeispiel gemäß Figur 6 unterscheidet sich von den vorherigen Ausführungsbeispielen insbesondere dadurch, dass das Fahrzeugsystem 1 als Fahrzeug 2 einen Radlader aufweist. Der Radlader 2 ist gemäß diesem Ausführungsbeispiel (Figur 6) wiederum mit vier Antennen 6, 8, 7, 9 versehen, die an zwei vorderen Kanten und zwei hinteren Kanten angeordnet sind. Die Warnzone 14 ist so konfiguriert, dass sowohl der Frontalabschnitt 22 als auch der Heckabschnitt 28 trapezförmig sich in die jeweiligen Fahrtrichtungen aufweitend ausgebildet sind. Dabei ist der Heckabschnitt 28 in Rückwärtsfahrtrichtung etwas länger, als der Frontalabschnitt 22 in Vorwärtsrichtung. Die Warnzone 14 ist daher in diesem Ausführungsbeispiel (Figur 6) an die besonderen Bedingungen und Einsatzzwecke eines Radladers angepasst. Ein Radlader fährt häufig Kurven, um Abraum zu transportieren und von einer Arbeitsstelle zu einem Transportfahrzeug zu bewegen. Um diesen häufigen Kurvenfahrten und insbesondere der häufigen Rückwärtsfahrt gerecht zu werden, ist die Warnzone 14 derart konfiguriert. Bezüglich der weiteren Ausgestaltungsmöglichkeiten wird auf die obige Beschreibung verwiesen. Auch bei diesem Ausführungsbeispiel ist es möglich, die Konfiguration der Warnzone 14 zu ändern, insbesondere in Abhängigkeit von der Fahrzeuggeschwindigkeit, Umgebungsbedingungen und dergleichen.

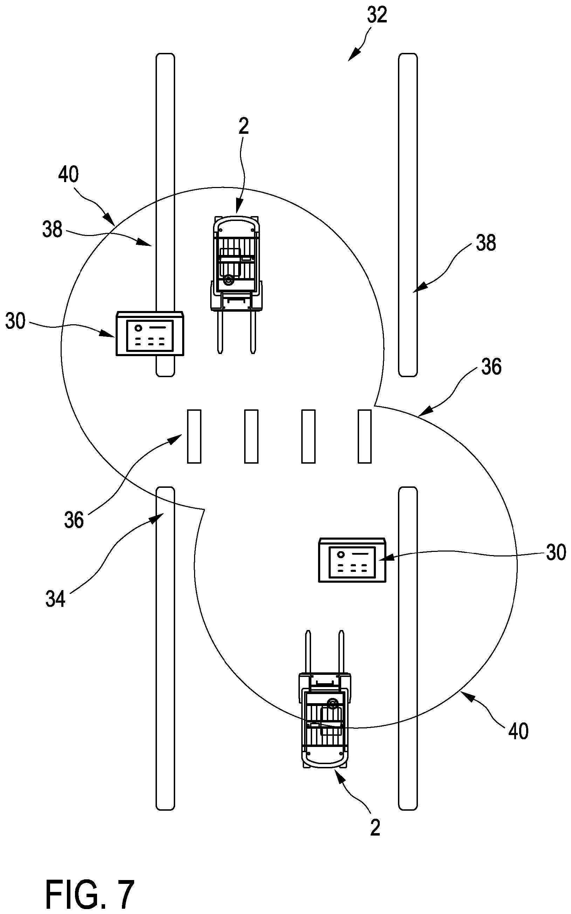

In Figur 7 ist ein Anwendungsfall für zwei stationäre Warnmodule (Figur 7, beide mit 30 bezeichnet) dargestellt. Schematisch ist ein Gang 32, auf dem zwei Fahrzeuge 2 in entgegengesetzte Richtungen fahren, gezeigt. Etwa in der Mitte von Figur 7 ist ein Personenübergang 34. Der Personenübergang 34 wird von zwei Durchgängen 36 in Wänden 38 definiert, die den Gang 32 definieren. In Fahrtrichtung jeweils vor dem Personenübergang 34 sind stationäre Warnmodule 30 angeordnet, und schematisch in Figur 7 ist deren Funkbereich 40 dargestellt. Die Warnzonen 14 der Fahrzeuge 2, die mit einer entsprechenden Fahrzeugsicherheitsvorrichtung 4 ausgestattet sind, sind in Figur 7 nicht gezeigt, können aber entsprechend in Figuren 1 bis 6 ausgebildet sein. Fährt nun ein Fahrzeug 2 derart auf ein Warnmodul 30 zu, dass das Warnmodul in die Warnzone 14 des Fahrzeugs gerät, wird ein Warnsignal an dem Warnmodul und/oder an einer entsprechenden Anzeigeeinheit 50 der Fahrzeugsicherheitsvorrichtung 4 an dem Fahrzeug 2 ausgegeben. Gleichzeit kann vorgesehen sein, dass ein Signal von der Fahrzeugsicherheitsvorrichtung an eine Fahrzeugsteuerung ausgegeben wird, sodass das Fahrzeug 2 abgebremst wird oder die Geschwindigkeit auf einen Höchstwert begrenzt wird. Hierdurch wird der Personenübergang 34 gesichert. Auch Personen, die den Personenübergang 34 überqueren wollen, sind in der Lage das von dem Warnmodul 30 ausgegebene Signal wahrzunehmen und werden so von einem heranfahrenden Fahrzeug 2 gewarnt.

In einer Variante ist das Warnmodul 30 tragbar ausgebildet. Dies ist schematisch in Figur 8 dargestellt. Das tragbare Warnmodul 30 weist eine Antenne 42 sowie mehrere Warnleuchten 44a, 44b, 44c (nur drei mit Bezugszeichen versehen, insgesamt mit 44 bezeichnet) auf. Diese sind in Form eines Warndreiecks angeordnet. Ferner ist das Warnmodul 30 mit einer Vibrationseinheit versehen, sodass das tragbare Warnmodul 30 in Vibration versetzt werden kann, wie durch die Schwingungen 46 angezeigt. Das von dem Warnmodul 30 ausgegebene Warnsignal ist also gemäß diesem Ausführungsbeispiel sowohl visuell erfassbar, wenn die Warnleuchten 44 eingeschaltet werden, als auch haptisch erfassbar, wenn das Warnmodul 30 in Vibration versetzt wird. Bevorzugt wird das Warnmodul 30 von einer Person am Körper getragen.

Figur 9 illustriert eine Anzeigeeinheit 50 einer Fahrzeugsicherheitsvorrichtung 4. Die Anzeigeeinheit 50 ist bevorzugt im Cockpit des Fahrzeugs 2, an dem die Fahrzeugsicherheitsvorrichtung 4 angeordnet ist, montiert. Die Anzeigeeinheit 50 dient dazu, einem Führer des Fahrzeugs 2 anzuzeigen, in welche Richtung und wie weit entfernt sich ein Warnmodul 30 in Bezug auf die Antenneneinheit 12 der Fahrzeugsicherheitsvorrichtung 4 befindet. Dazu weist die Anzeigeeinheit 50 eine Mehrzahl LEDs 52 auf (in Figur 9 nur eine mit Bezugszeichen versehen), die in einem Ring angeordnet sind. Es kann vorgesehen sein, dass beim Ausgeben einer Warnung alle LEDs 52 gemeinsam aufleuchten. Alternativ wird der Ring dazu benutzt, anzuzeigen, in welcher Richtung sich ein entsprechendes Warnmodul 30 befindet. Ein Fahrzeug 2, in dem die Anzeigeeinheit 50 positioniert ist, bildet in dieser Variante das Zentrum des Rings 52 und wenn beispielsweise die in Figur 9 oberste LED 52 aufleuchtet zeigt dies an, dass sich das entsprechende Warnmodul frontal vor dem Fahrzeug 2 befindet. Im unteren Bereich sind fünf weitere LEDs 54 in einer Reihe angeordnet. Diese LEDs 54 können dazu eingesetzt werden zusätzlich zu der Richtung, in der sich das Warnmodul 30 befindet auch den Abstand anzugeben. Leuchtet beispielsweise nur die in Figur 9 ganz linke LED 54 auf, bedeutet dies, dass das Warnmodul 30 relativ weit entfernt ist. Leuchtet allerdings die ganz rechte LED 54 auf, bedeutet dies, dass das Warnmodul 30 relativ nah an dem Fahrzeug 2 ist. Die Anzeigeeinheit 50 weist ferner eine Digitalanzeige 56, in welcher die Anzahl der sich innerhalb der Warnzone befindlichen Warnmodule 30 angegeben wird. So ist es beispielsweise denkbar, dass eine Gruppe von Personen detektiert wird, die alle ein Warnmodul 30 tragen. Die entsprechende Zahl wird dann in der Anzeige 56 angezeigt. Mit 58 ist ein Einschaltknopf bezeichnet, mit dem die Fahrzeugsicherheitsvorrichtung 4 ein- bzw. ausschaltbar ist.

Zusätzlich umfasst die Anzeigeeinheit 50 eine akustische Warneinrichtung, die nicht separat gezeigt ist. Aufgrund der drei Antennen 6, 7, 8, 9, 10 der Antenneneinheit 12 ist es möglich, die genaue Position P eines Warnmoduls 30 in Bezug auf die Antenneneinheit 12 zu bestimmen und diese Position P entsprechend durch Aufleuchten der entsprechenden LED's 52 anzuzeigen.

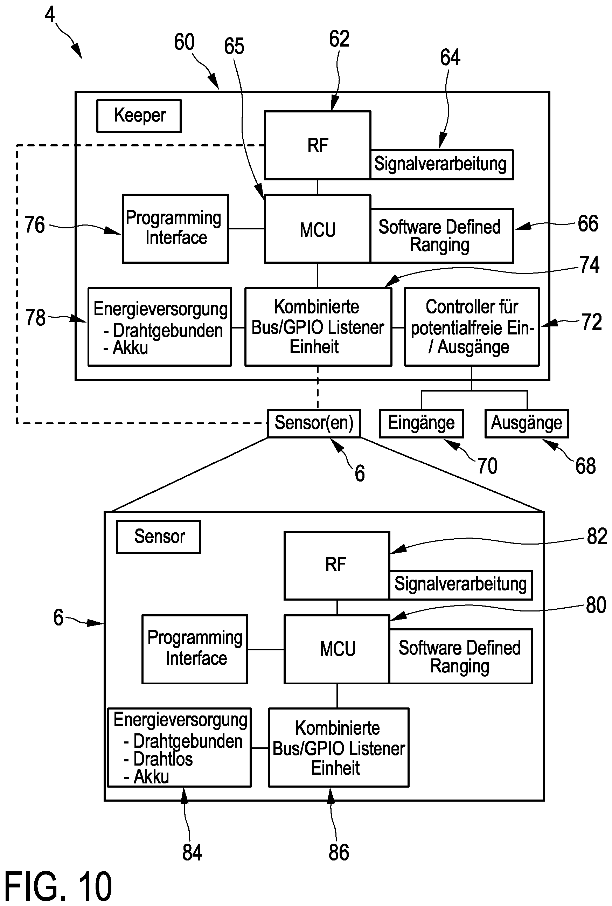

Figur 10 illustriert nun den internen Aufbau der Fahrzeugsicherheitsvorrichtung 4. Die Fahrzeugsicherheitsvorrichtung 4 weist eine Steuereinheit 60 auf, die an zentraler Stelle an dem Fahrzeug 2 montiert werden kann. Die Steuereinheit 60 ist wiederum mit einer Mehrzahl Antennen 6, 8, 10 (in Figur 10 auch als "Sensor" bezeichnet) verbunden. In Figur 10 ist nur eine Antenne 6 gezeigt. Die Steuereinheit 60 weist zum Anschluss an die Antennen 6 einen Hochfrequenzwandler 62, mit einer entsprechenden Signalverarbeitungseinheit 64 auf. Über den Hochfrequenzwandler 62 werden die entsprechenden Signale an die Antenne 6 gegeben und empfangen. Dies wird über einen Mikrocontroller 65 gesteuert. Der Mikrocontroller 65 weist ein Softwaremodul 66 auf, mittels dem die Warnzone 14 definiert wird. In dem Mikrocontroller 65 ist ferner eine Speichereinheit vorgesehen, in der vorbestimmte Konfigurationen für Warnzonen 14 gespeichert sind. Über entsprechende Ein- und Ausgänge 68, 70 ist die Steuereinheit 60 mit einer zentralen Fahrzeugsteuerung verbindbar bzw. verbunden und kann über einen entsprechenden Controller 72 sowie einen internen Bus 74 Signale, wie etwa Fahrzeuggeschwindigkeit, Lenkeinschlag, Sitzsensor, Bremssensoren und dergleichen an den Mikrocontroller 65 bereitstellen. Basierend auf diesen Werten definiert der Mikrocontroller 65 dann eine entsprechende Warnzone.

Es ist auch möglich, dass ein Bediener die Warnzone 14 selbst programmiert. Hierzu ist eine entsprechende Schnittstelle 76 vorgesehen. So lässt sich beispielsweise ein Notebook oder dergleichen an die Steuereinheit 60 anschließen und ein Bediener kann über ein entsprechendes Interface eine Warnzone 14 selbst definieren.

Weiterhin ist die Steuereinheit 60 mit einer Energieversorgung 78 gekoppelt, die auch Energie für die Antenneneinheit 12 bereitstellt.

Die Antennen 6, 7, 8, 9, 10 sind ebenfalls jeweils mit einer Platine ausgestattet, die entsprechende Bauteile, wie die Steuereinheit 60, aufweist. So weisen auch die Antennen 6, 7, 8, 9, 10 einen Mikrocontroller 80, einen Hochfrequenzwandler 82, eine Energieversorgung 84 sowie einen internen Bus 86 auf. Informationen über die Warnzone 14 werden von dem Mikrocontroller 65 an den Mikrocontroller 80 in den Antennen weitergegeben.

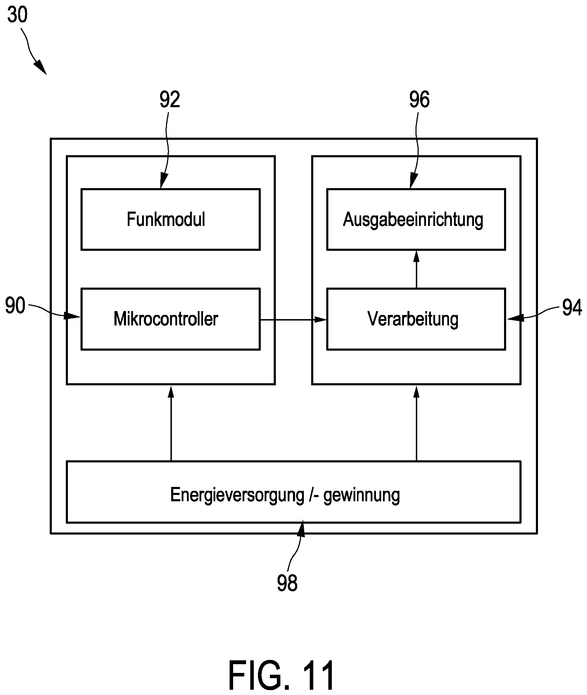

Gemäß Figur 11 ist eine entsprechende schematische Darstellung eines Warnmoduls 30 dargestellt. Dieses weist ebenfalls einen Mikrocontroller 90 auf, der mit einem entsprechenden Funkmodul 92, welches mit der Antenne 42 gekoppelt ist (vgl. Figur 8), auf. Das Funkmodul 92 ist auf die Antennen 6, 7, 8, 9, 10 der Fahrzeugsicherheitsvorrichtung 4 abgestimmt. Der Mikrocontroller 90 ist mit einer entsprechenden Verarbeiteeinheit 94 gekoppelt, die dazu eingerichtet ist, zu bestimmen, ob sich das Warnmodul 30 innerhalb der Warnzone 14 befindet oder nicht. Empfängt das Warnmodul 30 die Konfiguration der Warnzone 14 von der Fahrzeugsicherheitsvorrichtung 4 und durch Kooperation des Funkmoduls 92 mit den Antennen 6, 7, 8, 9, 10 kann ein Abstand zwischen Warnmodul 30 und der Antenneneinheit 12 überstimmt werden. Bestimmt die Verarbeiteeinheit 94 dann, dass sich das Warnmodul 30 innerhalb der Warnzone 14 befindet, wird über die Ausgabeeinrichtung 96 ein entsprechendes Warnsignal ausgegeben. Auch das Warnmodul 30 ist mit einer Energieversorung 98 gekoppelt. Diese kann auch, wie in WO 2011/151291 A1 beschrieben, mit einer Energiegewinnungseinrichtung versehen sein, die basierend beispielsweise auf Schwingungen oder dergleichen elektrische Energie bereitstellen kann.

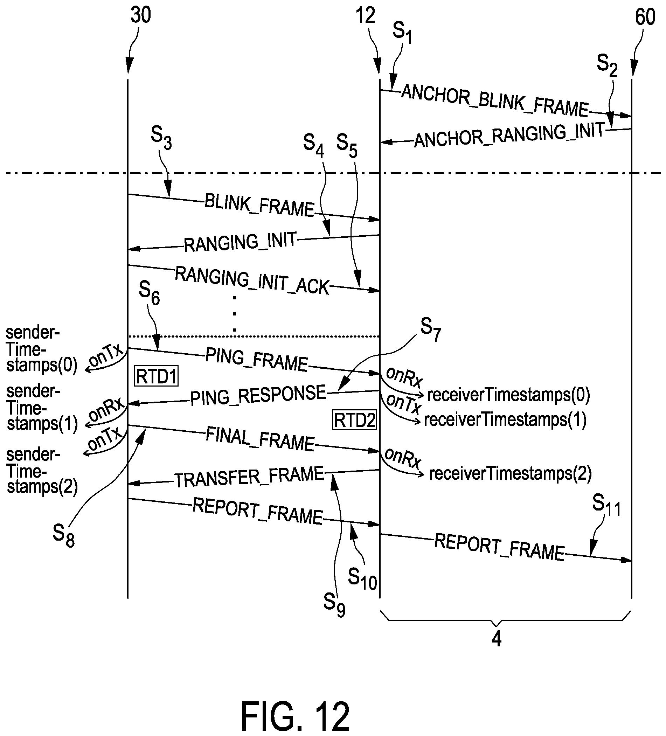

Figur 12 veranschaulicht schließlich die Kommunikation zwischen der Fahrzeugsicherheitsvorrichtung 4 und dem Warnmodul 30. Zunächst wird in einem ersten Signal S1 die Betriebsbereitheit der Antenneneinheit 12 an die Steuereinheit 60 gemeldet und die Steuereinheit 60 meldet in einem Signal S2 die definierte Warnzone 14 an die Antenneneinheit 12.

Kommt nun ein Warnmodul 30 in den Bereich, der durch die Antenneneinheit 12 abgedeckt ist, empfängt die Antenneneinheit 12 ein Blinksignal S3 des Warnmoduls. Das Warnmodul 30 sendet permanent derartige Blinksignale, um sich in Bezug auf Fahrzeugsicherheitsvorrichtungen 4 bemerkbar zu machen. Nach Empfang eines Blinksignals S3 sendet die Antenneneinheit 12 die Konfiguration der Warnzone 14 in einem Signal S4 an das Warnmodul 30. Das Warnmodul 30 sendet dann in Signal S5 zurück, dass es die Konfiguration der Warnzone 14 erhalten hat.

Das Warnmodul 30 sendet in Signal S6 ein Ping-Signal mit einem Zeitstempel, das von der Antenneneinheit 12 empfangen wird. Die Antenneneinheit 12 sendet anschließend ein entsprechendes Ping-Signal S7 mit einem eigenen Zeitstempel. Aus diesen beiden Zeitstempeln kann der Mikrocontroller 90 des Warnmoduls 30 bestimmen, ob sich das Warnmodul 30 innerhalb der Warnzone 14, die in Signal S4 mitgeteilt wurde, befindet. Der durch das Warnmodul 30 bestimmte Abstand von Warnmodul 30 zu Antenneneinheit 12 wird in Signal S8 der Antenneneinheit 12 mitgeteilt, die anschließend nochmal in Signal S9 die Warnzone 14 bestätigt. In Signal S10 gibt dann das Warnmodul 30 eine Mitteilung darüber an die Antenneneinheit 12, ob es sich innerhalb der Warnzone 14 befindet. Dies wird von Antenneneinheit 12 an die Steuereinheit 60 in Signal S11 gemeldet und die Steuereinheit 60 verarbeitet dieses Signal entsprechend. Gegebenenfalls geben das Warnmodul 30 und die Steuereinheit 60 ein entsprechendes Warnsignal aus.

## Patentansprüche

1. Sicherungssystem, umfassend
- eine Fahrzeugsicherheitsvorrichtung (4) zum Warnen von Personen im Verkehr, mit
einer Antenneneinheit (12) mit wenigstens einer ersten Antenne (6), einer zweiten Antenne (8) und einer dritten Antenne (10), die dazu ausgebildet sind, beabstandet voneinander und in einer vorbestimmten räumlichen Beziehung zueinander an vorbestimmten Positionen an einem zu sichernden Fahrzeug (1) montiert zu werden und jeweils ein elektromagnetisches Feld (16, 18, 20) erzeugen, und
einer mit der Antenneneinheit (12) verbundenen Steuereinheit (60), die dazu ausgebildet ist, eine Warnzone (14) für das Fahrzeug (1) zu definieren, die ein Teilbereich von zumindest einem der elektromagnetischen Felder (16, 18, 20) ist, sodass sich ein Warnmodul (30) innerhalb des Funkbereichs aller drei Antennen, aber außerhalb der Warnzone (14), befinden kann, und mittels der Antenneneinheit (12) zu bestimmen, ob sich ein auf die Antenneneinheit (12) abgestimmtes Warnmodul (30) innerhalb der Warnzone (14) befindet, und
wobei die Fahrzeugsicherheitsvorrichtung (4) dazu ausgebildet ist eine Konfiguration der Warnzone (14) an das Warnmodul (30) zu senden, wenn sich dieses in Reichweite der Antenneneinheit (12) befindet; **dadurch gekennzeichnet, dass** das Sicherungssystem ferner
- wenigstens ein Warnmodul (30), das auf die Antenneneinheit (12) der Fahrzeugsicherheitsvorrichtung (4) abgestimmt ist, aufweist,
wobei das Warnmodul (30) eine Steuereinheit (90) und eine Antenne (42) aufweist, die mit der Antenneneinheit (12) der Fahrzeugsicherheitsvorrichtung (4) kooperiert und wobei das Warnmodul (30) dazu ausgebildet ist, ein Signal zu empfangen und ein Warnsignal auszugeben, wenn bestimmt wird, dass sich das Warnmodul (30) innerhalb der Warnzone (14) befindet.

2. Sicherungssystem nach Anspruch 1,
wobei die Steuereinheit (60) dazu ausgebildet ist die Position (P) des Warnmoduls (30) innerhalb der Warnzone (14) relativ zu der Antenneneinheit (12) zu bestimmen.

3. Sicherungssystem nach einem der vorstehenden Ansprüche,
wobei die Steuereinheit (60) dazu angepasst ist, die Warnzone (14) in Abhängigkeit von wenigstens einem der folgenden Parameter zu definieren: Fahrtgeschwindigkeit, Fahrtrichtung, Ort, Beladung des Fahrzeugs, Tageszeit, relative Geschwindigkeit zu dem Warnmodul, Sitzkontaktschalter, Lenkeinschlag, Temperatur, Schlupf von Fahrzeugrädern, ABS-Signal.

4. Sicherungssystem nach einem der vorstehenden Ansprüche,
wobei die Warnzone (14) derart definiert ist, dass sie sich an dem entsprechenden Fahrzeug (1) von der Front langgestreckt nach vorne erstreckt und an Fahrzeugseiten schmal ausgebildet ist.

5. Sicherungssystem nach Anspruch 4,
wobei die Warnzone (14) einen Frontalabschnitt (22), der sich in einer vertikalen Projektion im Wesentlichen rechteckig oder trapezförmig sich aufweitend nach vorne erstreckt, und/oder zwei Seitenabschnitte (24, 26) aufweist, die sich etwa in einem Bereich von 30 cm bis 2,5 m von dem zu sichernden Fahrzeug (1) erstrecken.

6. Sicherungssystem nach einem der vorstehenden Ansprüche,
wobei die Steuereinheit (60) dazu angepasst ist in Antwort auf das Bestimmen, dass sich ein auf die Antenneneinheit (12) abgestimmtes Warnmodul (30) innerhalb der Warnzone (14) befindet, ein Warnsignal auszugeben, und
vorzugsweise dazu angepasst ist mit einer Fahrzeugsteuerung des zu sichernden Fahrzeugs (1) verbunden zu sein und das Warnsignal an die Fahrzeugsteuerung auszugeben, derart, dass das Fahrzeug (1) abgebremst wird.

7. Sicherungssystem nach einem der vorstehenden Ansprüche,
wobei die Antenneneinheit (12) eine vierte Antenne aufweist, die dazu vorgesehen ist einen sicheren Bereich zu definieren.

8. Sicherungssystem nach einem der vorstehenden Ansprüche,
wobei die Fahrzeugsicherheitsvorrichtung (4) dazu ausgebildet ist die relative Position (P) des Warnmoduls (30) zu der Antenneneinheit (12) an das Warnmodul (30) zu senden und
wobei die Steuereinheit (92) des Warnmoduls (30) vorzugsweise dazu ausgebildet ist basierend auf der empfangenen Konfiguration der Warnzone (14) und der empfangenen relativen Position (P) zu bestimmen, ob sich das Warnmodul (30) innerhalb der Warnzone (14) befindet.

9. Verfahren zur Warnung von Personen im Verkehr mit einem Sicherungssystem gemäß einem der vorstehenden Ansprüche 1 bis 8, mit den Schritten:
- Definieren einer Warnzone (14) mittels einer Steuereinheit (60) und einer daran angeschlossenen Antenneneinheit (12) zum Erzeugen von wenigstens einem elektromagnetischen Feld (16, 18, 20), wobei die Warnzone (14) wenigstens teilweise um ein Fahrzeug (1) definiert und ein Teilbereich von dem elektromagnetischen Feld (16, 18, 20) ist, sodass sich das Warnmodul (30) innerhalb des Funkbereichs aller drei Antennen, aber außerhalb der Warnzone (14), befinden kann;
- Überwachen der Warnzone (14) mittels Funk;
- Bestimmen, ob sich ein Warnmodul (30) innerhalb der Warnzone (14) befindet;
- Senden einer Konfiguration der Warnzone (14) an das Warnmodul (30); und
- Bestimmen der Position (P) des Warnmoduls (30) innerhalb der Warnzone (14).

10. Verfahren nach Anspruch 9, wobei der Schritt Definieren der Warnzone (14) umfasst:
- Zugreifen auf eine in einer Steuereinheit (65) vorgespeicherten Konfiguration der Warnzone (14);
- Verwenden der vorgespeicherten Konfiguration zur Definition der Warnzone (14).

11. Verfahren nach Anspruch 9 oder 10, wobei der Schritt Definieren der Warnzone (14) umfasst:
- Erfassen oder Bestimmen wenigstens einen der folgenden Parameter: Fahrtgeschwindigkeit, Fahrtrichtung, Ort, Beladung des Fahrzeugs, Tageszeit, relative Geschwindigkeit zu dem tragbaren Warnmodul, Sitzkontaktschalter;
- Ändern der Konfiguration der Warnzone (14) basierend auf dem wenigstens einen erfassten oder bestimmten Parameter.

12. Computerprogrammprodukt aufweisend Codemittel, die dazu ausgebildet sind, wenn auf einem Computer ausgeführt, das in den Ansprüchen 9 bis 11 definierte Verfahren auszuführen.

13. Verwendung des Sicherungssystemnach einem der Ansprüche 1 bis 8 bei einem Flurförderfahrzeug, insbesondere einem Gabelstapler, einem Minenfahrzeug, einem Baustellenfahrzeug oder einem Forstfahrzeug.

## Claims

1. A safety system comprising
- a vehicle safety device (4) for warning persons in traffic, having
an antenna unit (12) having at least a first antenna (6), a second antenna (8) and a third antenna (10) implemented to be mounted spaced apart from each other and in a predetermined spatial relationship to each other at predetermined positions on a vehicle (1) to be safeguarded and each generating an electromagnetic field (16, 18, 20); and
a control unit (60) connected to the antenna unit (12), the control unit is implemented to define a warning zone (14) for the vehicle (1), which is a subrange of at least one of the electromagnetic fields (16, 18, 20), such that a warning module (30) can be within the radio range of all three antennas, but outside the warning zone (14),
and to determine, by means of the antenna unit (12), whether a warning module (30) matched to the antenna unit (12) is located within the warning zone (14); and
wherein the vehicle safety device (4) is implemented to transmit a configuration of the warning zone (14) to the warning module (30) when it is located within range of the antenna unit (12); **characterized in that** the safety system further comprises
- at least one warning module (30) matched to the antenna unit (12) of the vehicle safety device (4),
wherein the warning module (30) comprises a control unit (90) and an antenna (42) which cooperates with the antenna unit (12) of the vehicle safety device (4) and wherein the warning module (30) is implemented to receive a signal and to output a warning signal when it is determined that the warning module (30) is located within the warning zone (14).

2. The safety system according to claim 1,
wherein the control unit (60) is implemented to determine the position (P) of the warning module (30) within the warning zone (14) relative to the antenna unit (12).

3. The safety system according to any of the preceding claims,
wherein the control unit (60) is adapted to define the warning zone (14) as a function of at least one of the following parameters: driving speed, direction of travel, location, vehicle load, time of day, relative speed to the warning module, seat contact switch, steering angle, temperature, vehicle wheel slip, ABS signal.

4. The safety system according to any of the preceding claims,
wherein the warning zone (14) is defined such that it extends longitudinally forward from the front of the corresponding vehicle (1) and is narrow on vehicle sides.

5. The safety system according to claim 4,
wherein the warning zone (14) comprises a frontal section (22) extending in a vertical projection in a substantially rectangular or trapezoidal manner widening in a forward direction and/or comprises two side sections (24, 26) which extend approximately in a range of 30 cm to 2.5 m from the vehicle (1) to be safeguarded.

6. The safety system according to any of the preceding claims,
wherein the control unit (60) is adapted to output a warning signal in response to determining that a warning module (30) matched to the antenna unit (12) is located within the warning zone (14), and
is preferably adapted to be connected to a vehicle controller of the vehicle (1) to be safeguarded and to output the warning signal to the vehicle controller such that the vehicle (1) is braked.

7. The safety system according to any of the preceding claims,
wherein the antenna unit (12) comprises a fourth antenna provided to define a safe region.

8. The safety system according to any of the preceding claims,
wherein the vehicle safety device (4) is implemented to transmit the relative position (P) of the warning module (30) to the antenna unit (12) to the warning module (30) and
wherein the control module (92) of the warning module (30) is preferably implemented to determine whether the warning module (30) is located within the warning zone (14) based on the received configuration of the warning zone (14) and the received relative position (P).

9. A method for warning persons in traffic with a safety system according to any of the preceding claims 1 to 8, having the steps:
- defining a warning zone (14) by means of a control unit (60) and a antenna unit (12) connected thereto for generating at least one electromagnetic field (16, 18, 20), wherein the warning zone (14) is defined at least partially around a vehicle (1) and is a subrange of at least one of the electromagnetic fields (16, 18, 20), so that the warning module (30) can be within the radio range of all three antennas, but outside the warning zone (14);
- monitoring the warning zone (14) by means of radio;
- determining whether a warning module (30) is located within the warning zone (14);
- transmitting a configuration of the warning zone (14) to the warning module (30); and
- determining the position (P) of the warning module (30) within the warning zone (14).

10. The method according to claim 9, wherein the step of defining the warning zone (14) comprises:
- accessing a configuration of the warning zone (14) pre-stored in a control unit (65);
- using the pre-stored configuration to define the warning zone (14).

11. The method according to claim 9 or 10, wherein the step of defining the warning zone (14) comprises:
- detecting or determining at least one of the following parameters: driving speed, direction of travel, location, vehicle load, time of day, relative speed to the portable warning module, seat contact switch;
- changing the configuration of the warning zone (14) based on the at least one detected or determined parameter.

12. A computer program product comprising code means implemented, when executed on a computer, to execute the method defined in claims 9 to 11.

13. A use of the vehicle safety device according to one of claims 1 to 8 in an industrial truck, in particular a forklift, a mining vehicle, a construction vehicle or a forestry vehicle.

## Revendications

1. Système de sécurité, comprenant
- un dispositif de sécurité (4) de véhicule pour avertir des personnes dans la circulation, avec
une unité d'antenne (12) avec au moins une première antenne (6), une seconde antenne (8) et une troisième antenne (10), qui sont conçues pour être montées espacées les unes des autres et dans une relation spatiale prédéterminée les unes par rapport aux autres à des positions prédéterminées sur un véhicule (1) à protéger et génèrent chacune un champ électromagnétique (16, 18, 20), et
une unité de commande (60) reliée à l'unité d'antenne (12), qui est conçue pour définir une zone d'avertissement (14) pour le véhicule (1), qui est une zone partielle d'au moins l'un des champs électromagnétiques (16, 18, 20), de sorte qu'un module d'avertissement (30) peut être situé à portée de radio de toutes les trois antennes, mais en dehors de la zone d'avertissement (14), et pour déterminer au moyen de l'unité d'antenne (12) si un module d'avertissement (30) accordé à l'unité d'antenne (12) est situé au sein de la zone d'avertissement (14), et
dans lequel le dispositif de sécurité (4) de véhicule est adapté pour transmettre une configuration de la zone d'avertissement (14) au module d'avertissement (30) lorsque ce dernier est à portée de l'unité d'antenne (12);
**caractérisé en ce que** le système de sécurité
- comporte en outre au moins un module d'avertissement (30) qui est accordé sur l'unité d'antenne (12) du dispositif de sécurité (4) de véhicule,
dans lequel le module d'avertissement (30) comprend une unité de commande (90) et une antenne (42) qui coopère avec l'unité d'antenne (12) du dispositif de sécurité (4) de véhicule et dans lequel le module d'avertissement (30) est conçu pour recevoir un signal et pour émettre un signal d'avertissement lorsqu'il est déterminé que le module d'avertissement (30) est situé au sein de la zone d'avertissement (14).

2. Système de sécurité selon la revendication 1,
dans lequel l'unité de commande (60) est conçue pour déterminer la position (P) du module d'avertissement (30) au sein de la zone d'avertissement (14) par rapport à l'unité d'antenne (12).

3. Système de sécurité selon l'une quelconque des revendications précédentes,
dans lequel l'unité de commande (60) est adaptée pour définir la zone d'avertissement (14) en fonction d'au moins l'un quelconque des paramètres suivants: vitesse de marche, sens de marche, emplacement, charge du véhicule, heure de la journée, vitesse relative par rapport au module d'avertissement, contacteur de siège, angle de braquage, température, patinage des roues du véhicule, signal ABS.

4. Système de sécurité selon l'une quelconque des revendications précédentes,
dans lequel la zone d'avertissement (14) est définie de sorte qu'elle s'étende de manière allongée vers l'avant au véhicule (1) correspondant et qu'elle soit de configuration étroite sur les côtés du véhicule.

5. Système de sécurité selon la revendication 4,
dans lequel la zone d'avertissement (14) comprend une partie frontale (22) qui, en projection verticale, s'étend sensiblement de manière rectangulaire ou trapézoïdale en s'élargissant vers l'avant, et/ou deux parties latérales (24, 26) qui s'étendent approximativement dans une plage de 30 cm à 2,5 m du véhicule (1) à protéger.

6. Système de sécurité selon l'une quelconque des revendications précédentes,
dans lequel l'unité de commande (60) est adaptée pour émettre un signal d'avertissement en réponse à la détermination du fait qu'un module d'avertissement (30) accordé à l'unité d'antenne (12) est situé au sein de la zone d'avertissement (14), et
est de préférence adaptée pour être connectée à une commande de véhicule du véhicule (1) à protéger et émettre le signal d'avertissement à la commande du véhicule, de sorte que le véhicule (1) soit freiné.

7. Système de sécurité selon l'une quelconque des revendications précédentes,
dans lequel l'unité d'antenne (12) comporte une quatrième antenne qui est prévue pour définir une zone sécurisée.

8. Système de sécurité selon l'une quelconque des revendications précédentes,
dans lequel le dispositif de sécurité (4) de véhicule est conçu pour transmettre au module d'avertissement (30) la position relative (P) du module d'avertissement (30) par rapport à l'unité d'antenne (12) et
dans lequel l'unité de commande (92) du module d'avertissement (30) est de préférence conçue pour, sur la base de la configuration reçue de la zone d'avertissement (14) et de la position relative (P) reçue, déterminer si le module d'avertissement (30) est situé au sein de la zone d'avertissement (14).

9. Procédé pour avertir des personnes dans la circulation par un système de sécurité selon l'une quelconque des revendications 1 à 8 précédentes, comprenant les étapes suivantes:
- définir une zone d'avertissement (14) au moyen d'une unité de commande (60) et d'une unité d'antenne (12) reliée à l'unité de commande pour générer au moins un champ électromagnétique (16, 18, 20), dans lequel la zone d'avertissement (14) est au moins partiellement définie autour d'un véhicule (1) et est une partie du champ électromagnétique (16, 18, 20), de sorte que le module d'avertissement (30) peut être situé à portée de radio de toutes les trois antennes, mais en dehors de la zone d'avertissement (14);
- surveiller la zone d'avertissement (14) par radio;
- déterminer si un module d'avertissement (30) se trouve au sein de la zone d'avertissement (14);
- transmettre une configuration de la zone d'avertissement (14) au module d'avertissement (30); et
- déterminer la position (P) du module d'avertissement (30) au sein de la zone d'avertissement (14).

10. Procédé selon la revendication 9, dans lequel l'étape consistant à définir la zone d'avertissement (14) comprend:
- accéder à une configuration de la zone d'avertissement (14) préenregistrée dans une unité de commande (65);
- utiliser la configuration préenregistrée pour définir la zone d'avertissement (14).

11. Procédé selon la revendication 9 ou 10, dans lequel l'étape consistant à définir la zone d'avertissement (14) comprend:
- détecter ou déterminer au moins l'un des paramètres suivants: vitesse de marche, sens de marche, emplacement, charge du véhicule, heure de la journée, vitesse relative par rapport au module d'avertissement portatif, contacteur de siège;
- modifier la configuration de la zone d'avertissement (14) sur la base de l'au moins un paramètre détecté ou déterminé.

12. Produit de programme informatique comprenant des moyens de code qui sont conçus pour, lorsqu'ils sont exécutés sur un ordinateur, exécuter le procédé défini dans les revendications 9 à 11.

13. Utilisation du système de sécurité selon l'une quelconque des revendications 1 à 8 dans un chariot de manutention, en particulier un chariot élévateur à fourches, un véhicule minier, un véhicule de chantier ou un véhicule forestier.
